# EUROPÄISCHE PATENTSCHRIFT

(11) **EP 2 052 432 B1**
(45) Veröffentlichungstag und Bekanntmachung des Hinweises auf die Patenterteilung: **17.04.2013**
(21) Anmeldenummer: 07801244.0
(22) Anmeldetag: 16.08.2007
(51) Int. Cl.: H01M 2/38, H01M 10/42, H01M 10/12

(54) **VERFAHREN ZUR HERSTELLUNG EINER FLÜSSIGELEKTROLYTBATTERIE**
METHOD FOR PRODUCING A LIQUID ELECTROLYTE BATTERY
PROCÉDÉ POUR PRODUIRE UNE BATTERIE À ÉLECTROLYTE LIQUIDE

(30) Priorität: 16.08.2006 DE 102006038047
(43) Veröffentlichungstag der Anmeldung: 29.04.2009
(73) Patentinhaber: IQ Power Licensing AG, 6300 Zug (CH)
(72) Erfinder: BAUER, C. Günther, 85521 Ottobrunn (DE)
(74) Vertreter: Müller & Schubert
(86) Internationale Anmeldenummer: PCT/DE2007/001453
(87) Internationale Veröffentlichungsnummer: WO 2008/019676

(56) Entgegenhaltungen:
- WO-A-95/15586
- WO-A-99/19923
- US-A- 4 221 847
- US-A1- 2005 058 899

## Beschreibung

Die Erfindung betrifft ein Verfahren zur Herstellung einer Flüssigelektrolytbatterie, die vorzugsweise in bewegbaren Einrichtungen, wie z. B. in Fahrzeugen, Booten oder Flugzeugen verwendet wird.

Das Bestreben insbesondere der Fahrzeugindustrie nach Leichtbauweise betrifft auch die Einsparung von Batteriegewicht. Gleichzeitig steigt jedoch die Anforderung nach höherer Batterieleistung, da neben der Energie zum Starten des Fahrzeugs auch für zusätzliche Aggregate wie elektrische Fensterheber, Stellmotore zum Verstellen der Sitze oder auch zum elektrischen Beheizen der Sitze Energie benötigt wird. Ferner ist es wünschenswert, die Batterieleistung über die Lebensdauer der Batterie möglichst auf einem konstanten hohen Niveau zu halten.

Aus dem Stand der Technik sind verschiedene Maßnahmen bekannt, um die Leistung einer herkömmlichen Blei-Säure-Batterie zu erhöhen. Unter Leistung wird nachfolgend die Fähigkeit der Batterie zur Stromabgabe bzw. zur Stromaufnahme verstanden.

Ein besonderes Problem bei Blei-Säure-Batterien ist die möglichst vollständige Nutzung der Elektrodenfläche. Ist in einem Bereich der Elektrodenoberfläche die Säurekonzentration zu hoch, führt das zu Korrosion und letztlich zur Zersetzung der Elektrodenplatten. Ist die Säurekonzentration zu niedrig, fehlen die für ein zuverlässiges Arbeiten der Batterie erforderlichen elektrolytischen Eigenschaften. Auf Grund verschiedener, aus dem Stand der Technik bekannten Effekte ist innerhalb einer Batterie die Säuredichte ungleichmäßig. Um diesen Mangel zu beheben, sind Vorrichtungen zur Elektrolytdurchmischung entwickelt worden. Damit wird auch gleichzeitig verhindert, daß sich Ablagerungen bilden, welche die Funktion und die Lebensdauer der Batterie ebenfalls beeinträchtigen.

In dem Dokument DE U1 9114909 ist eine Akkumulatorenbatterie offenbart, bei der durch Einleiten von Gas aus einer Druckgasquelle eine Elektrolytumwälzung erzwungen wird. Dieses Umwälzverfahren eignet sich wegen des komplizierten Aufbaus der Umwälzvorrichtung nur beschränkt für Fahrzeugbatterien, zumal zusätzlich noch eine Druckgasquelle erforderlich ist. Aus dem Stand der Technik sind weiterhin Elektrolytdurchmischungsvorrichtungen bekannt, die als hydrostatische Pumpen bezeichnet werden und deren Funktion nachfolgend beschrieben wird: Wenn ein Fahrzeug sich mit einer gleichförmigen Geschwindigkeit bewegt, d.h. weder abgebremst noch beschleunigt wird, ist die Oberfläche des flüssigen Elektrolyten in der im Fahrzeug eingesetzten Batterie eben und horizontal. Bei einem Brems- oder Beschleunigungsvorgang schwappt der Elektrolyt auf Grund der Massenträgheit hin und her. Die dabei entstehenden Elektrolytströmungen werden durch Barrieren und Kanäle so gelenkt, daß eine möglichst gute Durchmischung erreicht wird.

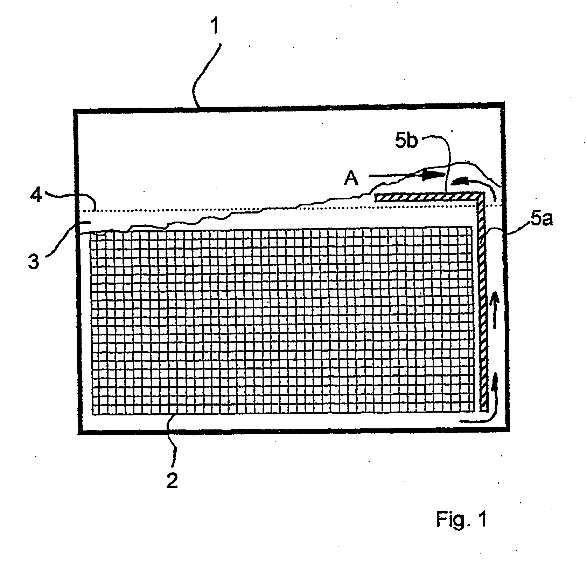

Dieses Prinzip ist u. a. in den Dokumenten US 4,963,444; US 5,096,787, US 5,032,476 und in dem deutschen Gebrauchsmuster 297 18 004.5 beschrieben, welches den nächstliegenden Stand der Technik bildet. Der Gegenstand des nächstliegenden Standes der Technik ist eine zwischen den Elektroden im Batteriekasten angeordnete winkelförmige Durchmischungsvorrichtung wie in Figur 1 gezeigt.

WO 95/15586 beschreibt das Verfahren zur Herstellung einer Blei-Säure-Batterie mit einer Durch- mischungsvorrichtung, das nachfolgende Schritte aufweist: erstens das Einsetzen einer Durchmischungsplatte und darauf folgend das Einsetzen der Elektrodenplattenpakets.

Bei der bisherigen Herstellung einer herkömmlichen Batterie ohne Durchmischungsvorrichtung oder einer Batterie mit Durchmischungsvorrichtung wird zuerst das Elektrodenplattenpaket 2 in den leeren Batteriekasten eingesetzt. Wenn eine Batterie mit Durchmischungsvorrichtung gebaut werden soll, muß das Elektrodenplattenpaket genau mittig im Batteriekasten positioniert werden, damit der Spalt zwischen der vertikalen Kante des Elektrodenplattenpakets und der Batteriekastenwand auf beiden Seiten die gleiche Breite hat. Das ist jedoch schwierig zu gewährleisten, da das Einsetzen des schweren Elektrodenplattenpakets von Hand erfolgt, weil der Einsatz von Robotern und ähnlicher Handhabetechnik zu teuer wäre.

Die Elektrodenplatten sind mit einer Kunststofffolie umhüllt, nachfolgend Elektrodentaschen genannt. Die Elektrodentaschen sind mechanisch sehr empfindlich. Das anschließende Einschieben der winkelförmigen Durchmischungsplatten links und rechts in den jeweiligen Spalt muß sehr sorgfältig erfolgen, um ein Beschädigen der Elektrodentaschen, zu vermeiden. Beschädigte Elektrodentaschen führen zu einem vorzeitigen Ausfall der betroffenen Batteriezelle und somit zu einer Minderleistung der Batterie.

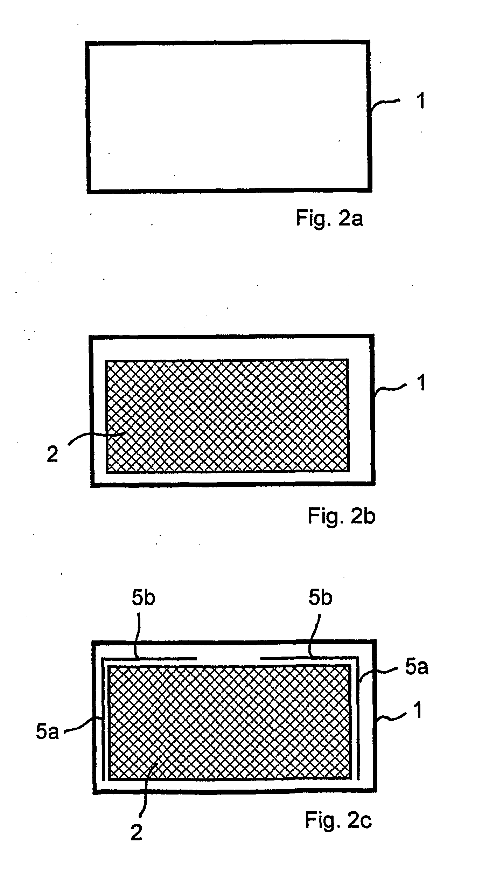

Bei dem in Figur 2 dargestellten Fall ist das Elektrodenplattenpaket zu weit links im Batteriekasten positioniert, so daß der Spalt zwischen der vertikalen Kante des Elektrodenplattenpakets und der Batteriekastenwand auf der linken Seite schmaler ist als auf der rechten Seite.

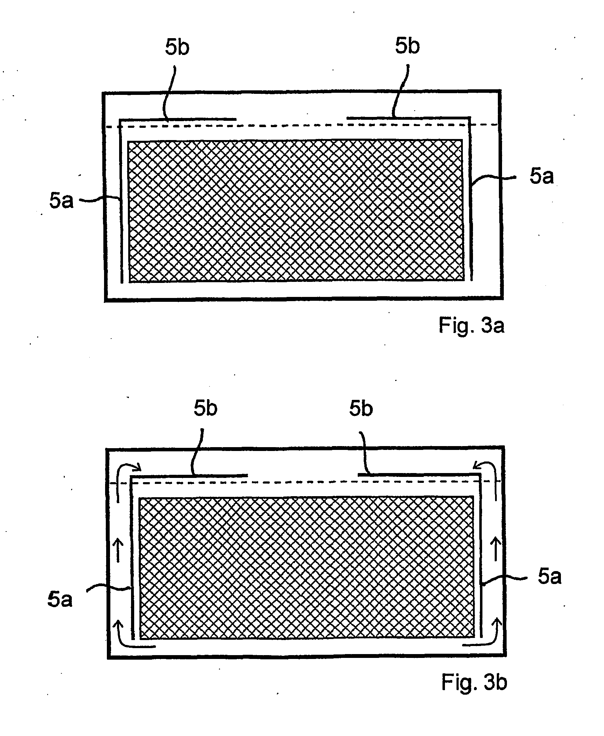

Das herkömmliche Herstellungsverfahren hat noch einen weiteren Nachteil, der in Fig. 3 schematisch dargestellt ist. Wenn das Elektrodenplattenpaket nicht in der konstruktiv vorgesehenen Position steht, wie in Fig. 3a gezeigt, ist der zwischen der Batteriewand und dem senkrechten Schenkel der Durchmischungsplatte gebildete Strömungskanal auf der linken Seite schmaler als jener auf der rechten Seite. Diese Strömungskanäle sind jedoch hinsichtlich ihrer Breite optimiert, so daß die Veränderung der Breite den Wirkungsgrad der Durchmischung verringert. Bei dem in Figur 3b dargestellten Fall sind die Strömungskanäle auf beiden Seiten gleich breit, so daß eine gute Durchmischung erfolgt, wie durch die Strömungspfeile angedeutet ist.

Ein besonderer Nachteil dieser Fertigungstechnologie besteht darin, dass Beschädigungen der Elektrodentaschen bei der Endkontrolle der Batterie nicht mehr festgestellt werden können. Deshalb ist ein Beschädigen der Elektrodentaschen unbedingt zu vermeiden. Gleichzeitig dürfen die Kosten für diesen Montageschritt nicht steigen. Es ist also nach einer einfachen und trotzdem zuverlässigen Lösung zu suchen. Es besteht somit die Aufgabe der Erfindung in der Beseitigung des beim Stand der Technik zu verzeichnenden Mangels. Insbesondere soll ein Beschädigen der Elektrodentaschen verhindert werden.

Diese Aufgabe wird durch ein Fertigungsverfahren zur Fertigung von Flüssigelektrolytbatterien mit einer Durchmischungsvorrichtung nach Anspruch 1 gelöst.

Das Verfahren weist nachfolgende Schritte auf:
- Einsetzen je einer Durchmischungsplatte von Hand an den zwei vorgesehenen sich gegenüberliegenden Wänden des Batteriegehäuses, wobei die Durchmischungsplatten leicht schräg stehen, d. h. der im Stand der Technik verwendete Durchmischungswinkel ist bei diesem Verfahren in einen senkrechten und in einen waagerechten Abschnitt geteilt. Der senkrechte Abschnitt wird nachfolgend als Durchmischungsplatte bezeichnet. Die Durchmischungsplatten stehen leicht schräg in dem Batteriekasten, d. h. sie weisen eine Neigung zwischen ca. 10 und 25 Grad auf, je nach Bauform der Batterie.
- Einsetzen des Elektrodenplattenpakets zwischen die zwei im Batteriekasten positionierten Durchmischungsplatten, die dabei in eine senkrechte Stellung geschoben werden, d. h. wenn das Elektrodenplattenpaket von Hand in den Batteriekasten eingesetzt wird, werden die Durchmischungsplatten in die vorgesehene senkrechte Position gerückt bzw. geschoben. Da die Durchmischungsplatten leicht und glatt sind, besteht bei dieser Prozedur keine Gefahr, die Elektrodentaschen zu beschädigen. Außerdem wird durch die als Zentrierhilfe dienenden Durchmischungsplatten das Elektrodenplattenpaket beim Einsetzen von Hand in die richtige Lage gerückt.
- Aufsetzen einer Durchmischungsbrückenplatte waagerecht auf die beiden senkrecht stehenden Durchmischungsplatten.

Durch diese technologischen Schritte bei der Batteriefertigung werden die nachfolgend beschriebenen Vorteile erzielt.

Da zuerst die leicht schrägen Durchmischungsplatten der geteilten Durchmischungsvorrichtung in das Batteriegehäuse eingesetzt werden, dann das Einsetzen des Elektrodenplattenpaket zwischen die Durchmischungsplatten erfolgt, wird ein Beschädigen der empfindlichen Seitenkanten der Elektrodenplatten weitgehend vermieden. Es handelt sich hierbei um einen selbstzentrierenden Vorgang. Diese Selbstzentrierung kann noch unterstützt werden, wenn der Batteriekasten auf einer Röllchenbahn steht.

Weiterhin werden bei dem erfindungsgemäßen Fertigungsverfahren die Elektrodenplatten durch die beidseitig bereits eingeführten Durchmischungsplatten genau in der vorbestimmten Position in dem Batteriekasten angeordnet. Das hat den weiteren Vorteil, daß die elektrischen Anschlüsse jeder Elektrodenplatte sich in einer exakt vorbestimmten räumlichen Lage befinden. Nachfolgend werden mittels eines Schweißroboters die Anschlüsse miteinander verschweißt und dadurch die einzelnen Batteriezellen in Reihe geschaltet. Bisher mußten die Anschlüsse relativ breit ausgeführt sein, damit auch dann, wenn die Elektrodenplatten nicht optimal zueinander positioniert worden waren, diese miteinander verschweißt werden konnten. Da erfindungsgemäß die Elektrodenplatten exakt zueinander ausgerichtet werden und dadurch keine großen Toleranzen mehr auszugleichen sind, ist eine Verkleinerung der Anschlüsse und trotzdem genaues Verschweißen der Anschlüsse miteinander möglich. Durch die kleineren Anschlüsse können pro Batterie ca. 200 Gramm oder mehr Blei eingespart werden.

Nach dem Einsetzen der Durchmischungsplatten und des Elektrodenplattenpakets wird die Durchmischungsbrückenplatte auf die senkrecht ausgerichteten Durchmischungsplatten gelegt und rechtwinklig mit diesen verbunden, so daß eine kompakte Durchmischungseinheit entsteht. Diese Durchmischungsbrückenplatte trägt beim Aufsetzen auf die senkrecht angeordneten Durchmischungsplatten auch dazu bei, Verformungen des Batteriekastens, die beim Spritzgießen entstanden sind, wieder zu egalisieren, und den Batteriekasten insgesamt zu versteifen. Ein weiterer Vorteil gegenüber dem Stand der Technik besteht auch darin, daß die als Elektrolytablauffläche dienende Oberseite der Durchmischungsbrückenplatte von beiden Stirnseiten aus zur Mitte hin eine vorbestimmte Neigung aufweist, die sich bei der Montage der Durchmischungsbrückenplatte und beim Aufsetzen des Batteriekastendeckels nicht mehr verändert und die weitgehend unabhängig von Fertigungstoleranzen des Batteriekastens ist, so daß eine optimale Durchmischungswirkung erzielt wird. Das erfindungsgemäße Herstellungsverfahren wird an Hand von Zeichnungen näher erläutert.
- Fig. 1: zeigt die Seitenansicht einer Bleisäure-Batterie mit einem Durchmischungswinkel aus dem Stand der Technik.
- Fig. 2 (2a - 2c): zeigt einen Verfahrensabschnitt des Fertigungsverfahrens nach dem Stand der Technik.
- Fig. 3 (3a, 3b): zeigt einen Funktionsvergleich zwischen dem Stand der Technik und der Erfindung.
- Fig. 4 (4a - 4d): zeigt die erfindungsgemäßen Montageschritte.
- Fig. 5 (5a, 5b): zeigt eine Durchmischungsbrücke in perspektivischer Darstellung.

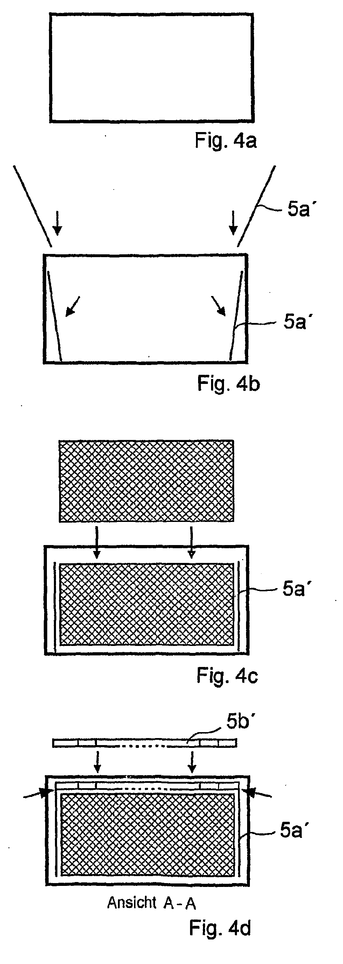

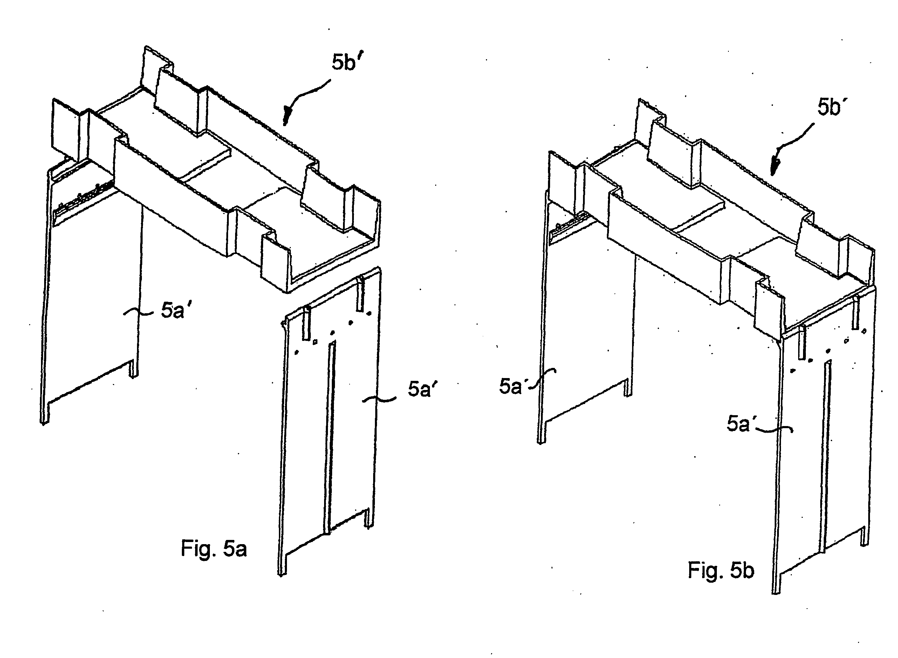

Die Erfindung wird an Hand der Figuren 4 und 5 erläutert, wobei die Figuren 1 bis 3, die den Stand der Technik zeigen, mit einbezogen werden.

Die Fig. 1 zeigt einen Batteriekasten 1 mit einer Bleielektrodenplatte 2 und einer Säurefüllung 3, deren Pegel im mechanischen Ruhezustand mit 4 bezeichnet ist. Mit 5a und 5b sind der senkrechte bzw. der waagerechte Schenkel der winkelförmigen Durchmischungsvorrichtung bezeichnet. Ist die Batterie z. B. in einem Fahrzeug eingebaut, das sich in die mit dem Pfeil A gekennzeichneten Richtung bewegt, wird bei einem Bremsvorgang die Säure zwischen dem senkrechten Schenkel 5a und der Gehäusewand nach oben gedrückt und läuft über den waagerechten Schenkel 5b ab. Dieser regelmäßig auftretende Vorgang führt zu der gewünschten Säuredurchmischung. Die Durchmischungsvorrichtung ist in Fig. 1 nur auf einer Seite des Batteriekastens 1 dargestellt.

In der Fig. 2 sind die relevanten Verfahrensschritte zur Fertigung einer solchen herkömmlichen Batterie gezeigt. In einen leeren Batteriekasten 1 wird zuerst das Bleielektrodenplattenpaket 2 eingesetzt. Dabei kommt es vor, daß das Bleielektrodenplattenpaket 2 nicht ganz mittig steht, wie in Figur 2b dargestellt. In einem nächsten Verfahrensschritt werden auf beiden Seiten die Durchmischungswinkel 5a, 5b eingesteckt. Dabei kann es vorkommen, daß die Kunststoffummantelungen der Bleielektrodenplatten 2 auf der linken Seite beschädigt werden, weil das Bleielektrodenplattenpaket 2, wie in Fig. 2c gezeigt, zu nahe an der Wand des Batteriekastens 1 steht. Eine Beschädigung der Kunststoffummantelung einer Elektrodenplatte führt zu einem vorzeitigen Ausfall dieser Zelle und somit der gesamten Batterie.

Die Fig. 3 zeigt noch einen weiteren Nachteil des herkömmlichen Herstellungsverfahrens: Wenn das Elektrodenplattenpaket nicht in der konstruktiv vorgesehenen Position steht, wie in Figur 3a dargestellt, sind die von der jeweiligen Batteriewand und dem senkrechten Schenkel des jeweiligen Durchmischungswinkel gebildeten zwei Strömungskanäle unterschiedlich breit. Diese Strömungskanäle sind jedoch hinsichtlich ihrer Breite optimiert, so daß die Veränderung der Breite den Wirkungsgrad der Durchmischung verringert. In Figur 3b sind die Strömungskanäle auf beiden Seiten gleich breit, so daß eine durch Pfeile angedeutete gute Durchmischung erfolgt.

In Fig. 4 wird das erfindungsgemäße Verfahren beschrieben. Es wird eine neuartige Durchmischungsvorrichtung eingesetzt, die aus drei Teilen besteht, aus zwei Durchmischungsplatten 5a' und einer Durchmischungsbrückenplatte 5b'. Zuerst werden die Durchmischungsplatten 5a' leicht schräg in den Batteriekasten 1 eingesetzt (Fig. 4b) und erst danach erfolgt das Einsetzen des Elektrodenplattenpakets 2 (Fig. 4c.) Durch diese Maßnahme wird erreicht, daß das Elektrodenplattenpaket 2 genau mittig im Batteriekasten 1 steht. Im letzten erfindungsgemäßen Arbeitsgang, dargestellt in Figur 4d, wird die Durchmischungsbrückenplatte auf die senkrecht ausgerichteten Durchmischungsplatten gelegt und rechtwinklig mit diesen verbunden.

Die Figur 5a und 5b zeigen die aus den zwei Durchmischungsplatten 5a' und der Durchmischungsbrückenplatte 5b' zusammengesetzte Durchmischungsvorrichtung in perspektivischer Darstellung, wobei Figur 5a die Durchmischungsvorrichtung in Explosivdarstellung, Figur 5b diese im zusammengebauten Zustand zeigt. Es ist zu betonen, daß das erfindungsgemäße Verfahren auch zur Herstellung von Flüssigelektrolytbatterien geeignet ist, die eine Durchmischungsvorrichtung mit einer von der Figurenbeschreibung abweichenden Form aufweist, wie das z. B. bei LKW-Batterien der Fall ist.

## Patentansprüche

1. Verfahren zur Herstellung einer Blei-Säure-Batterie mit einer Durchmischungsvorrichtung, das nachfolgende Schritte aufweist:
- Einsetzen von Durchmischungsplatten **(5a')** in den Batteriekasten **(1),** jeweils eine an zwei sich gegenüberliegenden Seiten des Kastens, wobei die Durchmischungsplatten leicht schräg stehen,
- Einsetzen des Elektrodenplattenpakets **(2)** zwischen die in den Batteriekasten **(1)** gestellten zwei Durchmischungsplatten **(5a'),** die dabei in die senkrechte Stellung geschoben werden, wobei die geometrischen Abmessungen des Batteriekastens **(1),** des Elektrodenplattenpakets **(2)** und der Durchmischungsplatten **(5a')** so ausgelegt sind, daß beim Einsetzen des Elektrodenplattenpakets dieses in einer konstruktiv vorbestimmten Lage im Batteriekasten angeordnet wird und dabei die vorgesehenen Strömungskanalquerschnitte erreicht werden,
- Verbinden der senkrecht ausgerichteten zwei Durchmischungsplatten (5a') rechtwinklig mit einer Durchmischungsbrückenplatte (5b'); die näherungsweise in der Mitte eine Ausnehmung für den Elektrolytdurchlauf und zur Mitte hin eine leicht abwärts geneigte Ablauffläche für den Elektrolyt aufweist.

2. Verfahren nach Anspruch 1, **dadurch gekennzeichnet, daß** die Durchmischungsbrückenplatte **(5b')** auf die zwei senkrecht ausgerichteten Durchmischungsplatten **(5a')** gesteckt oder geclipst wird.

3. Verfahren nach Anspruch 1, **dadurch gekennzeichnet, daß** der Batteriekasten beim Einsetzen des Elektrodenplattenpakets **(2)** auf einer Röllchenbahn steht.

## Claims

1. Method for producing a lead-acid battery with a mixing device, which comprises the following steps:
- inserting one mixing plate (5a') each into the battery case (1) on two opposite sides of the case, the mixing plates being placed in a slightly inclined manner,
- inserting a pack of electrode plates (2) between the two mixing plates (5a') placed in the battery case (1) and, thereby, moving the mixing plates (5a') so that they are aligned perpendicularly, with the battery case (1), the pack of electrode plates (2) and the mixing plates (5a') being geometrically dimensioned so that the pack of electrode plates is arranged in the battery case in a constructively predetermined position and the predetermined cross sections of the flow channels are gained, and
- connecting the two perpendicularly aligned mixing plates (5a') at right angles with a mixing bridge plate (5b') comprising approximately in the center thereof a recess for the electrolyte to flow through and a surface slightly sloped towards the center for the electrolyte to run off.

2. Method according to claim 1, **characterized in that** the mixing bridge plate (5b') is slipped or clipped onto the two perpendicularly aligned mixing plates (5a').

3. Method according to claim 1, characterized tin that, for inserting the pack of electrode plates, the battery case (1) is placed on a roller train.

## Revendications

1. Procédé de fabrication d'une batterie plomb-acide avec un dispositif de mélange, lequel procédé comprend les étapes suivantes consistant à :
- utiliser des plaques de mélange (5a') dans les boîtiers de batterie (1), respectivement une plaque de mélange au niveau de deux côtés se faisant face du boîtier, sachant que les plaques de mélange sont légèrement obliques,
- utiliser le paquet de plaques d'électrodes (2) entre les deux plaques de mélange (5a') placées dans les boîtiers de batterie (1), lesquelles sont dans ce cadre glissées dans la position perpendiculaire, sachant que les dimensions géométriques du boîtier de batterie (1), du paquet de plaques d'électrodes (2) et des plaques de mélange (5a') sont configurées de telle manière que lors de l'utilisation du paquet de plaques d'électrodes, ce dernier est disposé dans le boîtier de batterie dans une position prédéterminée d'un point de vue structural et que ce faisant les sections transversales de canal d'écoulement prévues sont obtenues,
- relier les deux plaques de mélange (5a') orientées de manière perpendiculaire à angle droit à une plaque en pont de mélange (5b'), laquelle présente approximativement en son centre un évidement pour le passage de l'électrolyte et en direction de son centre une surface d'écoulement inclinée légèrement vers le bas pour l'électrolyte.

2. Procédé selon la revendication 1, **caractérisé en ce que** la plaque en pont de mélange (5b') est enfichée ou clipsée sur les deux plaques de mélange (5a') orientées de manière perpendiculaire.

3. Procédé selon la revendication 1, **caractérisé en ce que** le boîtier de batterie se trouve sur un convoyeur à roulettes lors de l'utilisation du paquet de plaques d'électrodes (2).
